(19) Europäisches Patentamt
European Patent Office
Office européen des brevets

(11) **EP 2 469 225 B1**

(12) **EUROPEAN PATENT SPECIFICATION**

(45) Date of publication and mention
of the grant of the patent:
**23.10.2013 Bulletin 2013/43**

(51) Int Cl.:
***G01M 5/00*** *(2006.01)*

(21) Application number: **10425391.9**

(22) Date of filing: **24.12.2010**

(54) **Automatic measuring system for monitoring the stability of a structure**

Automatisches Messsystem zur Überwachung der Stabilität einer Struktur

Système de mesure automatique adapté à la surveillance de stabilité d'une structure

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.06.2012 Bulletin 2012/26**

(73) Proprietor: **Agisco S.r.l.**
**20124 Milano (IT)**

(72) Inventors:
 • **Robotti, Franco**
  **20090 Segrate (MI) (IT)**

 • **Di Mauro, Marco**
  **20124 Milano (IT)**

(74) Representative: **Zizzari, Massimo**
**Studio Zizzari**
**P.le Roberto Ardigò, 42**
**00142 Roma (IT)**

(56) References cited:
**US-A- 6 076 269      US-A1- 2004 187 329
US-A1- 2007 069 115    US-B1- 7 743 520**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention is related to a measurement device, suitable to detect, in *real time,* deformations occurring in big and complex structures, like bridges and viaducts, during the load tests of a stability monitoring process.

This device includes a certain number of special sensors, the so called *electrolevels,* that are placed in critical points of the structure to be monitored, and detect the tilt angle at each point in respect to a reference value. These data are then transmitted to a processing system, that provides the reconstruction of the global deformation outline of the same structure. The communication system enables a data transmission using a *wireless* system, that guarantees the best versatility of this device in front of many different conditions of embodiments and number of sensors.

From the *state of the art* some known devices are available, using the *electrolevels* in order to monitor the stability of bridges and viaducts. It is the case of the system disclosed in patent US 4.547.972, including a certain number of *electrolevels* able to detect an angular variation occurring at some specific points of a structure and, in case of overpassing a definite value of threshold, an alarm signal is activated. A similar system is known from document US 2004/0187329 A1. English patent GB 1.251.220 concerns a monitoring device suitable to detect settlement of large buildings, including a measurement bar steadily fixed to the foundation of a building, and a datum bar steadily fixed to the surrounding ground. A tilt sensor, represented by an *electrolevel,* is connected to the datum bar, so that variations due to settlement movements of the same building are detected.

Patent US 6.647.161 discloses a system monitoring the stability of a bridge, or a generic structure, including a set of optical sensors, all connected in *real time* to a central control unit. This control unit is able to generate an alarm signal in case of detection of a structural breakdown or attitude variations beyond a certain threshold.

All the above solutions disclose some embodiments of tilt sensors, or *electrolevels,* directly in touch with the structures to be monitored. However, in case of large construction works, it is possible that the surface to be measured, like i.e. the road platform on bridges and viaducts, remains still unprocessed, having some rough material or concrete mixture on it. In such conditions, a load test could give poor outcomes, because the surface to be monitored has an irregular shape, and small displacements could define big variations of tilt on sensors.

A possible solution could be to embed a big number of sensors, close each other, or to duplicate or triple the measurement lines, and to extract the average of the outcoming results. Unfortunately, this solution would increase the system complexity, and consequently would give a significant increase of costs with reference to components and their management and maintenance.

The present invention will overcome and solve all above problems, its main goal consisting in the development of a measurement device, suitable to detect deformations occurring in big and complex structures, including a certain number of measuring elements, each of them having a tilt sensor, so called *electrolevel,* and each of them being placed on a supporting structure, so that each measure is detected, as an average value, in respect to the local roughness of surface, and wherein the same measure is not affected by phenomena of thermal expansion of materials.

Another goal of invention consists in that all the data, coming from the *electrolevels,* are acquired and processed in *real time* by an electronic control circuit, so that the deformation outline of the entire structure can be reconstructed, in respect to a specific reference outline, and the same data are saved and transmitted, in *real time,* to a remote control unit.

Another further goal of invention is to be composed of modular parts, so that it can be adapted, choosing the number of detection points and their connections, according to different embodiments and structures to be monitored.

Therefore, the present invention provides an automatic measuring system, for monitoring the stability of a structure, like a bridge or a viaduct, according to claim 1.

Compared to known devices, the present invention offers further advantages, because it guarantees a high accuracy of outline reconstruction as a consequence of high accuracy in data detected by *electrolevels,* and because the supporting structure is stable on irregular surfaces. Therefore, considering different structures to be monitored, having the same size, those using such a device can employ less sensors, so that they result to be simpler and cheaper.

At the same time, this device can be composed of modular parts, and a modular data acquisition process, so that it can be adapted to any different embodiments and structures to be monitored.

This invention is now being described for illustrative but non-limiting purposes, with particular reference to figures of the enclosed drawings, where:

figure 1 is a perspective view of a measuring element, with an *electrolevel,* belonging to the automatic measuring system of the present invention;
figure 2 is a lateral view of the same measuring element of figure 1;
figure 3 is a front view of the same measuring element of figure 1;
figure 4 is a top view of the same measuring element of figure 1;
figure 5 is a front perspective view of a set of *electrolevels,* placed close to the sleepers of a railway track;
figure 6 is a schematic view of the upper outline of a bridge or a viaduct, wherein some points are reported for detection and reconstruction of the deformation outline of the structure;

figure 7 is a lateral view of a bridge during the construction process;
figure 8 is a lateral schematic view of points on a bridge, like that of figure 7, where measuring elements, like that of figure 1, are placed.

It is here underlined that only few of the many conceivable embodiments of the present invention are described, which are just some specific non-limiting examples, having the possibility to describe many other embodiments based on the disclosed technical solutions of the present invention.

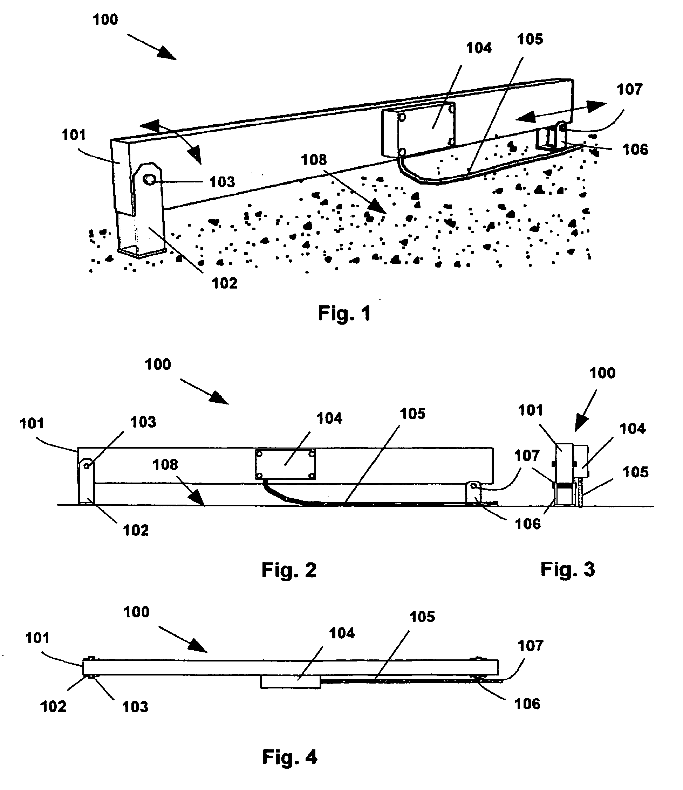

The present invention is related to a measurement device, suitable to detect, in *real time,* deformations occurring in big and complex structures, like bridges and viaducts, during the load tests of a stability monitoring process. The same device includes a certain number of measuring elements 100, like that illustrated in figures 1-4, each of them further comprising a tiltmeter 104, able to detect a tilt angle in respect to a horizontal reference plane.

Said tiltmeter 104 is an *electrolevel,* that further comprises as main components: a housing, partially filled of an electrolytic liquid; at least a pair of electrodes, partially in touch with the above said liquid, and at least a common reference electrode. The missing part of liquid is occupied by an air or gas bubble, that moves according to a tilt of the same housing, in respect to the horizontal plane. When the housing moves, the part of surface of the pair of electrodes, that is in touch with the electrolytic liquid, can increase or decrease, and the *impedance* changes accordingly in respect to the reference electrode. As a consequence, an electronic circuit connected to said electrodes generates an output voltage that is proportional to the detected *impedance,* and therefore proportional to the tilt angle detected by the *electrolevel* 104 in respect to the horizontal plane.

Using this principle, each *electrolevel* 104 is able to detect very small angular variations, in respect to the horizontal plane, in the order i.e. of $\pm$ *0,5 degrees* up to$\pm$ *0,1 degrees.*

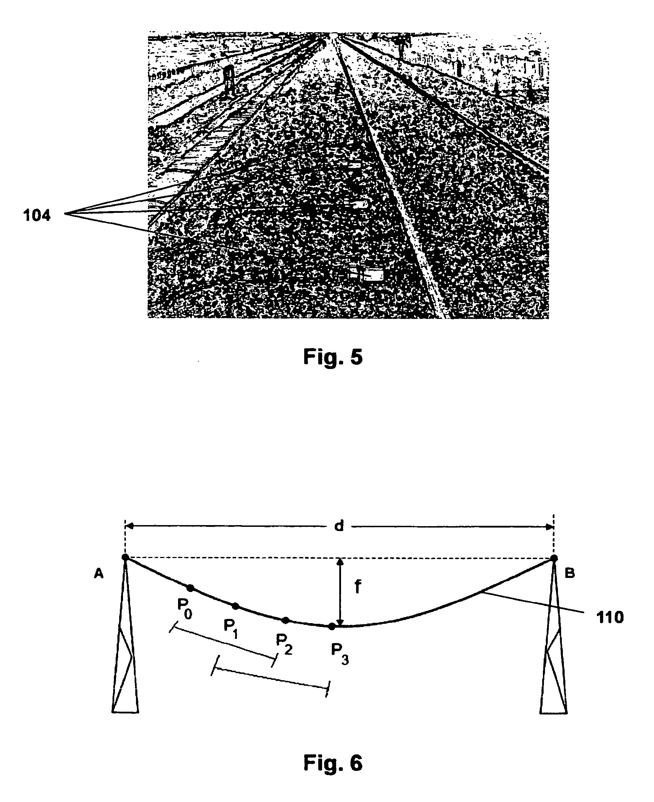

Figure 5 shows an example of a set of *electrolevels* 104 used to monitor possible attitude variations close to the sleepers of a railway track. In this case, the *electrolevels* 104 are placed all transversal to the longitudinal direction of the railway track, so that possible breakdowns or deformations along the transversal direction are detected on site. In general, the *electrolevels* 104 can be placed all aligned horizontally, following the longitudinal axis of the structure, so that possible breakdowns of the same structure can be detected along the longitudinal direction. Otherwise, the *electrolevels* 104 can be placed all aligned horizontally, and transversally in respect to the longitudinal axis of the structure, so that possible breakdowns of the same structure can be detected along the transversal direction. However, *electrolevels* can be placed following any direction in space, in respect of which it is required to detect angular variations.

The innovative feature of the present invention consists in that each measuring element 100 further comprises a supporting structure, composed of a rigid linear bar 101. In particular, said bar 101 includes: at one end, an articulated joint 102 achieving a rotary degree of freedom, in respect to a transversal pivot 103 of reference; and at the other end, a mobile base placed on wheels 107, achieving a translatory degree of freedom of the same bar 101 in the longitudinal direction.

In such a way, each measure is detected, as an average value, in respect to the local roughness of surface, due i.e. to an embodiment placed on unprocessed and not linear surfaces 108. Furthermore, at the same time, the same measure is not affected by phenomena of thermal expansion of materials.

All data coming from the *electrolevels* 104, and related to measurements of tilt angles in respect to a reference plane, are transmitted to an electronic control circuit. Said circuit further comprises: means for data acquisition; means for reconstruction of the deformation outline of the entire structure, in respect to a reference outline; means for storage of a data base; and means for transmission of the same data, in *real time,* to a remote control unit.

The data transmission, in *real time,* to a remote control unit, can be achieved by modulation of electric signals on conductive cables, or modulation of optical signals on optical fibers, or modulation of electromagnetic radiation on air, or modulation of electric signals routed on fixed, mobile or satellite telephone networks, or a combination of the above said techniques.

In a similar way, data transmission from one or more of said *electrolevels* 104 to said electronic control circuit can be achieved by modulation of electric signals on conductive cables, or modulation of optical signals on optical fibers, or modulation of electromagnetic radiation on air, or modulation of electric signals routed on fixed, mobile or satellite telephone networks, or a combination of the above said techniques.

In the many conceivable embodiments, *electrolevels* 104 can be supplied by electric energy coming from one or more of the following means: a cable connected to the national electric network; a current generator powered by a fuel; a battery or an external accumulator; an internal rechargeable battery; a device with solar panels. Furthermore, *electrolevels* 104 can be connected to the electronic control circuit, according to one of the following topologies: star, tree, line, ring. Then, one or more connections between *electrolevels* 104 and electronic control circuit can be redundant, with connections that can be duplicate, triple, or more, using one, or a combination of, data transmission techniques chosen from the previously listed ones.

According to the different conceivable embodiments, said electronic control circuit and said external control unit can be contained inside the same processing means, that can be i.e. a *personal computer,* or a *tablet PC,* or a *smartphone,* or a PDA, or a *workstation,* or a *mainframe,* or any other possible processing or multiprocessing device.
In order to reconstruct a deformation outline of the entire structure, starting from data coming from respective *electrolevels* 104, a *software* automatically runs within said processing means, embedding a method of a piecewise polynomial approximation. The resulting curve is an approximation of a catenary curve that, as known, considering both bounded ends, has a shape like that of figure 6, represented by a mathematical function 110, so called *hyperbolic cosine:*

$$y = k \cdot \cosh\left(\frac{x}{k}\right) = \frac{k}{2} \cdot \left(e^{(x/k)} + e^{(-x/k)}\right) \tag{1}$$

Said method is composed by the following steps:

- the detection points are collected in sets of three points and, for each respective tilt measure, the trigonometric function *tangent* is calculated, obtaining therefore the first derivative of the outline curve;
- for each set of three points Po, $P_1$, $P_2$ the following coordinates are considered

$$P_0(x_0, y_0) \qquad\qquad P_1(x_1, y_1) \qquad\qquad P_2(x_2, y_2) \tag{2}$$

and a parabolic approximation is chosen, of type:

$$y = a \cdot x^2 + b \cdot x + c \tag{3}$$

changing the above coordinates of points, the following system is obtained:

$$\begin{cases} y_0 = a \cdot x_0^2 + b \cdot x_0 + c \\ y_1 = a \cdot x_1^2 + b \cdot x_1 + c \\ y_2 = a \cdot x_2^2 + b \cdot x_2 + c \end{cases} \tag{4}$$

that can be written in a matrix form:

$$\begin{pmatrix} y_0 \\ y_1 \\ y_2 \end{pmatrix} = \begin{pmatrix} x_0^2 & x_0 & 1 \\ x_1^2 & x_1 & 1 \\ x_2^2 & x_2 & 1 \end{pmatrix} \cdot \begin{pmatrix} a \\ b \\ c \end{pmatrix} \tag{5}$$

that is:

$$Y = A \cdot T \tag{6}$$

solving the matrix equation (6), with *det (A)* $\neq$ *0* it is obtained:

$$\begin{pmatrix} a \\ b \\ c \end{pmatrix} = T = A^{-1} \cdot Y \tag{7}$$

from which, parameters a, b, c are calculated and put in formula (3), so to lead to the graphic curve of the deformation outline, locally reconstructed;

- a new set of three points, that is given by a one step forward displacement, is composed by $P_1, P_2, P_3$, and the previous calculation is repeated on the new points, up to the end of structure;
- when the end of structure is reached, the method is repeated considering new sets of three points taken in reverse order, and going backward from the end of the structure to the initial point.

The above described approximation method is used, as a first instance, in order to achieve a reference outline of the structure, in example without a load or without events that cause deformations. The respective *zero measures,* detected by *electrolevels* 104, are saved using said means for storage of a data base.

The same method is then used, as a second instance, in order to achieve a deformation outline of the structure, in example with a load or with events that cause deformations. In this case, the current measures detected by *electrolevels* 104 are subtracted by respective *zero measures* previously saved. The result is a deformation outline that is calculated as a difference in respect to a previous detected outline. Considering sensors placed each other at a distance of 3-7 *meters,* it is possible to reach a level of accuracy in the order of the tenths of a millimeter. For sensor placed instead each other at a distance of *15-20 meters,* the level of accuracy is in the order of the millimeter. Embodiments, at the construction sites, suitable for monitoring the stability of bridges or viaducts, achieve satisfactory results even considering one measuring point for each *20 meters,* and very good results are obtained considering one measuring point for each 10 *meters.* Considering commercial beams, having a standard length of 32 *meters,* the ideal number of detection points is five: two at the ends, and three in between.

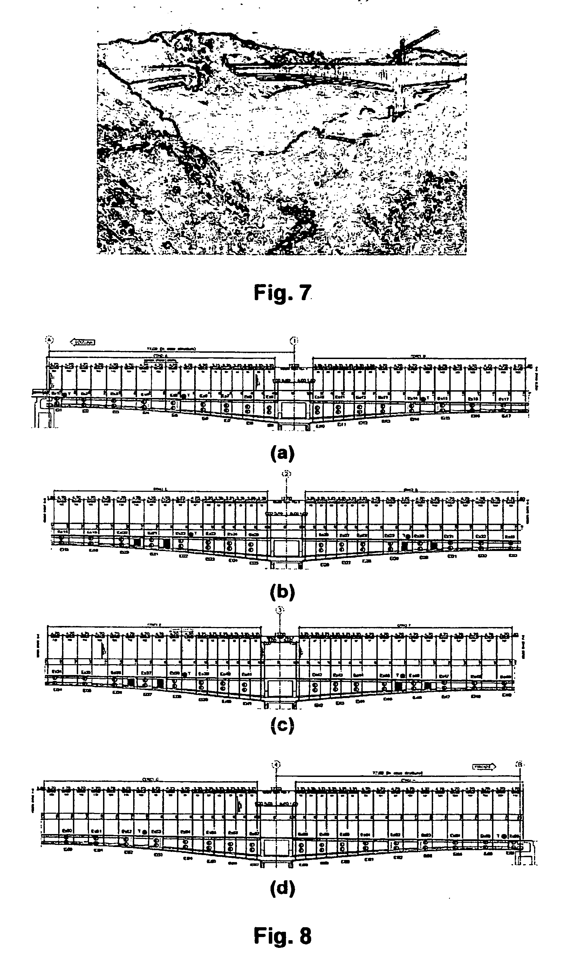

Figures 7-8 show a different use of the same device, for monitoring deformation of structures, during the construction process of a bridge, assembled using the method of extending segments. In particular, it is shown respectively an intermediate step of the construction works, and the positions of respective measuring points on the same structure.

After description of above examples there is evidence to say that this invention achieves all its goals and, in particular, a measurement device, suitable to detect deformations occurring in big and complex structures, including a certain number of measuring elements, each of them having a tilt sensor, so called *electrolevel,* and each of them being placed on a supporting structure, so that each measure is detected, as an average value, in respect to the local roughness of surface, and wherein the same measure is not affected by phenomena of thermal expansion of materials.

Another achievement of invention consists in that all the data, coming from the *electrolevels,* are acquired and processed in *real time* by an electronic control circuit, so that the deformation outline of the entire structure can be reconstructed, in respect to a specific reference outline, and the same data are saved and transmitted, in *real time,* to a remote control unit.

Furthermore, the invention is composed of modular parts, so that it can be adapted, choosing the number of detection points and their connections, according to different embodiments and structures to be monitored.

This invention is described for illustrative but non-limiting purposes, following some preferred achievements; however it goes without saying that modifications and/or changes would be introduced without departing from the relevant scope, as defined in the enclosed claims.

**Claims**

1. Automatic measuring system for monitoring the stability of a structure, like a bridge or a viaduct, comprising:

- a set of measuring elements (100), each of them being placed at a respective critical point of the same structure, and each measuring element (100) further comprising an *electrolevel*, able to detect a tilt angle in respect to a reference plane;
- an electronic control circuit, that further comprises: means for data acquisition, said data coming from said respective *electrolevels* (104), and concerning measurements of tilt angles; means for reconstruction of the deformation outline, in respect to a reference outline; means for storage of a data base; and means for transmission of the same data, in *real time*, to a remote control unit,

**characterized in that**:

- each of said measuring elements (100) further comprises a supporting structure, composed of a rigid linear bar (101) that includes: at one end, an articulated joint (102) achieving a rotary degree of freedom, in respect to a transversal pivot (103) of reference; and at the other end, a mobile base placed on wheels (107), achieving a translatory degree of freedom of the same bar (101) in the longitudinal direction,

so that each tilt angle measurement is detected, as an average value, in respect to the local roughness of surface, when the measuring element is placed on unprocessed and non-linear surfaces, and wherein the same tilt angle measurement is not affected by phenomena of thermal expansion of materials.

2. Automatic measuring system, according to previous claim 1, **characterized in that**:

   - said measuring elements (100), with respective *electrolevels* (104), are placed all aligned horizontally, following the longitudinal axis of a structure on which they are installed, so that possible breakdowns or deformations on site can be detected along the longitudinal direction.

3. Automatic measuring system, according to previous claim 1, **characterized in that**:

   - said measuring elements (100), with respective *electrolevels* (104), are placed all aligned horizontally, and transversally in respect to the longitudinal axis of a structure on which they are installed, so that possible breakdowns or deformations on site can be detected along the transversal direction.

4. Automatic measuring system, according to one of previous claims, **characterized in that**:

   - said data transmission, in *real time*, to a remote control unit is achieved by modulation of electric signals on conductive cables, or modulation of optical signals on optical fibers, or modulation of electromagnetic radiation on air, or modulation of electric signals routed on fixed, mobile or satellite telephone networks, or a combination of the above said techniques.

5. Automatic measuring system, according to one of previous claims, **characterized in that**:

   - said data transmission from one or more of said *electrolevels* (104) to said electronic control circuit is achieved by modulation of electric signals on conductive cables, or modulation of optical signals on optical fibers, or modulation of electromagnetic radiation on air, or modulation of electric signals routed on fixed, mobile or satellite telephone networks, or a combination of the above said techniques.

6. Automatic measuring system, according to previous claim 1, **characterized in that**:

   - said electronic control circuit and said remote control unit are contained inside the same processing means, such as a *personal computer*, or a *tablet PC*, or a *smartphone*, or a PDA, or a *workstation*, or a *mainframe*, or any other possible processing or multiprocessing device.

7. Automatic measuring system, according to one of previous claims, **characterized in that**:

   - each of said *electrolevels* (104) further comprises as main components: a housing, partially filled of an electrolytic liquid; at least a pair of electrodes, partially in touch with the above said liquid, and at least a common reference electrode; the missing part of liquid is occupied by an air or gas bubble, that moves according to a tilt of the same housing in respect to the horizontal plane,

   so that when the housing moves, the part of surface of the pair of electrodes, that is in touch with the electrolytic liquid, can increase or decrease, and the *impedance* changes accordingly in respect to the reference electrode wherein an electronic circuit connected to said electrodes generates an output voltage that is proportional to the detected *impedance*, and therefore proportional to the tilt angle detected by the electrolevel (104) in respect to the horizontal plane.

8. Automatic measuring system, according to one of previous claims, **characterized in that** said means for reconstruction of the deformation outline of the entire structure use a method of piecewise polynomial approximation of a catenary curve that, considering both bounded ends, has a shape represented by a mathematical function (110), so called *hyperbolic cosine*:

$$y = k \cdot \cosh\left(\frac{x}{k}\right) = \frac{k}{2} \cdot \left(e^{(x/k)} + e^{(-x/k)}\right) \qquad (1)$$

9. Automatic measuring system, according to previous claim 8, **characterized in that** said approximation method is composed by the following steps:

- the detection points are collected in sets of three points and, for each respective tilt measure, the trigonometric function *tangent* is calculated, obtaining therefore the first derivative of the outline curve;
- for each set of three points $P_0$, $P_1$, $P_2$ the following coordinates are considered:

$$P_0(x_0, y_0) \qquad P_1(x_1, y_1) \qquad P_2(x_2, y_2) \qquad (2)$$

and a parabolic approximation is chosen, of type:

$$y = a \cdot x^2 + b \cdot x + c \qquad (3)$$

changing the above coordinates of points, the following system is obtained:

$$\begin{cases} y_0 = a \cdot x_0^2 + b \cdot x_0 + c \\ y_1 = a \cdot x_1^2 + b \cdot x_1 + c \\ y_2 = a \cdot x_2^2 + b \cdot x_2 + c \end{cases} \qquad (4)$$

that can be written in a matrix form:

$$\begin{pmatrix} y_0 \\ y_1 \\ y_2 \end{pmatrix} = \begin{pmatrix} x_0^2 & x_0 & 1 \\ x_1^2 & x_1 & 1 \\ x_2^2 & x_2 & 1 \end{pmatrix} \cdot \begin{pmatrix} a \\ b \\ c \end{pmatrix} \qquad (5)$$

that is:

$$Y = A \cdot T \qquad (6)$$

solving the matrix equation (6), with $det(A) \neq 0$ it is obtained:

$$\begin{pmatrix} a \\ b \\ c \end{pmatrix} = T = A^{-1} \cdot Y \qquad (7)$$

from which, parameters a, b, c are calculated and put in formula (3), so to lead to the graphic curve of the deformation outline, locally reconstructed;
- a new set of three points, that is given by a one step forward displacement, is composed by $P_1$, $P_2$, $P_3$, and the previous calculation is repeated on the new points, up to the end of structure;
- when the end of structure is reached, the method is repeated considering new sets of three points taken in reverse order, and going backward from the end of the structure to the initial point.

10. Automatic measuring system, according to previous claim 9, **characterized in that**:

- said approximation method is used, as a first instance, in order to achieve said reference outline of the structure, in example without a load or without events that cause deformations of said structure, based on respective zero *measures* detected by *electrolevels* (104); the same *zero measures* are saved using said means for storage of a data base;

- said approximation method is used, as a second instance, in order to achieve a deformation outline of the structure, under the effect of a load or events that cause deformations of said structure, based on measures detected by *electrolevels* (104), that are subtracted by respective *zero measures* previously saved.

**11.** Automatic measuring system, according to one of previous claims, **characterized in that**:

- said *electrolevels* (104) are supplied by electric energy coming from one or more of the following means: a cable connected to the national electric network; a current generator powered by a fuel; a battery or an external accumulator; an internal rechargeable battery; a device with solar panels.

**12.** Automatic measuring system, according to one of previous claims, **characterized in that**:

- said *electrolevels* (104) are connected to the electronic control circuit, according to one of the following topologies: star, tree, line, ring.

**13.** Automatic measuring system, according to previous claims 5 and 12, **characterized in that**:

- one or more connections between said *electrolevels* (104) and said electronic control circuit is redundant, with connections that can be duplicate, triple, or more, using one, or a combination of, data transmission techniques chosen from the ones listed in the previous claim 5.

**14.** Automatic measuring system, according to one of previous claims, **characterized in that**:

- said *electrolevels* (104) are placed, during the construction process of a bridge, on extending segments, in order to monitor deformation of the bridge.


**Patentansprüche**

**1.** Gerät zur Spannungsanalyse, um die Stabilität einer Struktur, wie eine Brücke oder ein Viadukt zu überwachen. Es umfasst:

- eine Reihe von Messelementen (100), von denen jedes in Entsprechung eines entsprechenden kritischen Punktes derselben Struktur positioniert ist und jedes Messelementen (100), das seinerseits eine *elektronische Wasserwaage* (104) umfasst, in der Lage ist, den Neigungswinkel in Bezug auf eine Referezebene zu erfassen;
- eine elektronische Steuerschaltung, die ihrerseits folgendes umfasst: eine Datenerfassungseinrichtung, wobei dies die gleichen Daten sind, die von der entsprechenden *elektronische Wasserwaage* (104) stammen und entsprechend zu den Messungen des Neigungswinkel sind; Mittel zur Rekonstruktion des Profils der Verformung der gesamten Struktur in Bezug auf ein Referenzprofil; Mittel für die Speicherung des Datenverlaufs; und Mittel zur Fernübertragung in *Echtzeit* derselben, zu einer Fernsteuerungseinheit,

das **dadurch gekennzeichnet ist, dass**:

- jedes der obengenannten Messelemente (100) seinerseits eine Stützstruktur umfasst, die aus einer linearen starren Leiste (101) besteht, die folgendes vorweist: an einem Ende ein Gelenk (102), das derselben Leiste (101) einen Drehfreiheitsgrad in Bezug auf einen Referenzquerstift (103) ermöglicht; und am anderen Ende eine bewegliche Halterung auf einem Lager (107), die derselben Leiste (101) einen translatorischen Freiheitsgrad in der Längsrichtung ermöglicht,

so dass jede Messung des Neigungswinkels, im Mittelwert, hinsichtlich zu den lokalen Unebenheiten der Oberflächen, wo das Messelement auf rauen und nicht linearen Oberflächen positioniert ist, erfasst wird und bei der dieselbe Messung des Neigungswinkels gegenüber Phänomenen der thermischen Ausdehnung der Materialien immun ist.

**2.** Gerät zur Spannungsanalyse, gemäß dem Anspruch 1 **dadurch gekennzeichnet, dass**:

- die obengenannten Messelemente (100), mit den entsprechenden *elektronischen  Wasserwaagen* (104), alle horizontal entlang der Längsachse der Struktur, auf der sie installiert sind, ausgerichtet sind, so dass die etwaigen Setzungen oder Verformungen an der Stelle entlang der Längsrichtung erfasst werden.

3. Gerät zur Spannungsanalyse, gemäß dem Anspruch 1 **dadurch gekennzeichnet, dass**:

- die obengenannten Messelemente (100), mit den entsprechenden *elektronischen Wasserwaagen* (104), alle horizontal und quer entlang der Längsachse der Struktur, auf der sie installiert sind, ausgerichtet sind, so dass die etwaigen Setzungen oder Verformungen an der Stelle entlang der Querrichtung erfasst werden.

4. Gerät zur Spannungsanalyse, gemäß einem der vorherigen Ansprüche **dadurch gekennzeichnet, dass**:

- die obengenannte Ferndatenübertragung in *Echtzeit* zu einer externen Steuereinheit über eine Modulation von elektrischen Signalen auf Leitungsdrähte oder über eine Modulation von optischen Signalen auf Faseroptik oder über eine Modulation einer elektromagnetischen Strahlung, abgestrahlt in den Äther oder über eine Modulation von elektrischen Signalen, die auf ein Telefonfestnetz, Mobilnetz oder Satellitennetz geleitet werden oder über eine Kombination der obengenannten Techniken erfolgt.

5. Gerät zur Spannungsanalyse, gemäß einem der vorherigen Ansprüche **dadurch gekennzeichnet, dass**:

- die obengenannte Datenübertragung von einer oder mehreren der obengenannten *elektronischen Wasserwaagen* (104) zur obengenannten elektronischen Steuerschaltung über eine Modulation von elektrischen Signalen auf Leitungsdrähte oder über eine Modulation von optischen Signalen auf Faseroptik oder über eine Modulation einer elektromagnetischen Strahlung, abgestrahlt in den Äther oder über eine Modulation von elektrischen Signalen, die auf ein Telefonfestnetz, Mobilnetz oder Satellitennetz geleitet werden oder über eine Kombination der obengenannten Techniken erfolgt.

6. Gerät zur Spannungsanalyse, gemäß dem vorherigen Anspruch 1 **dadurch gekennzeichnet, dass**:

- die obengenannten elektronischen Steuerschaltung und die obengenannte Fernsteuerungseinheit innerhalb derselben Verarbeitungsmitttel enthalten sind, die aus einem *Personal Computer* oder aus einem *Tablet PC* oder aus einem *Smartphone* oder aus einem PDA oder aus einer *Workstation* oder aus einem *Mainframe* oder aus irgendeinem anderen Ein-Prozessor- oder Multiprozessor- System bestehen

7. Gerät zur Spannungsanalyse, gemäß einem der vorherigen Ansprüche **dadurch gekennzeichnet, dass**:

- jede der obengenannten *elektronischen Wasserwaagen* (104) hauptsächlich folgendes umfasst: einen Behälter, teilweise gefüllt mit einer elektrolytischen Flüssigkeit; mindestens ein Paar von Elektroden, die teilweise in dieselbe Flüssigkeit eingetaucht sind und mindestens eine gemeinsame Referenzelektrode; der fehlende Teil der Flüssigkeit ist durch eine Blase aus Luft oder Inertgas besetzt, die sich entsprechend einer Neigung desselben Behälters in Bezug auf die horizontale Ebene bewegt,

so dass, wenn sich der Behälter bewegt, jede Elektrode den Teil der Oberfläche in Kontakt mit der elektrolytischen Flüssigkeit anhebt oder absenkt, indem folglich ihre *Impedanz* in Bezug auf die Referenzelektrode variiert; und indem eine elektronische Schaltung, die an die obengenannten Elektroden angeschlossen ist, eine Ausgangsspannung erzeugt, die direkt proportional zur erfassten *Impedanz* ist und daher direkt proportional zum Neigungswinkel der *elektronischen Wasserwaage* (104) in Bezug auf die horizontale Ebene ist.

8. Gerät zur Spannungsanalyse, gemäß einem der vorherigen Ansprüche **dadurch gekennzeichnet, dass** die obengenannten Mittel zur Rekonstruktion des Profils der Verformung der gesamten Struktur eine stückweise polinomiale Näherungsmethode einer Kettenlinie verwenden, die unter Berücksichtigung der beiden Extrempunkte als Fixpunkte, einen Verlauf hat, der durch die mathematische Funktion (110) vom Typ Hyperbelkosinus dargestellt wird:

$$y = k \cdot \cosh\left(\frac{x}{k}\right) = \frac{k}{2} \cdot \left(e^{(x/k)} + e^{(-x/k)}\right)$$

$$(1)$$

**9.** Gerät zur Spannungsanalyse, gemäß dem Anspruch 8 **dadurch gekennzeichnet, dass** die obengenannte Näherungsmethode aus den folgenden Schritten besteht:

- die Erfassungspunkte werden in Dreigruppen betrachtet und in Entsprechung mit jeder entsprechenden Winkelmessung wird die trigonometrische Tangensfunktion berechnet und somit der Verlauf der ersten Ableitung des Profils gewonnen;
- für jede Gruppe von drei Punkten $P_0$, $P_1$, $P_2$ werden daher die Koordinaten berücksichtigt:

$$P_0(x_0, y_0) \qquad P_1(x_1, y_1) \qquad P_2(x_2, y_2) \qquad (2)$$

und man wählt eine Näherung der parabolischen Art, wie:

$$y = a \cdot x^2 + b \cdot x + c \qquad (3)$$

indem die Koordinaten der Punkte ersetzt werden, erhält man das Gleichungssystem:

$$\begin{cases} y_0 = a \cdot x_0^2 + b \cdot x_0 + c \\ y_1 = a \cdot x_1^2 + b \cdot x_1 + c \\ y_2 = a \cdot x_2^2 + b \cdot x_2 + c \end{cases}$$

$$(4)$$

das in Matrixform umgeschrieben werden kann:

$$\begin{pmatrix} y_0 \\ y_1 \\ y_2 \end{pmatrix} = \begin{pmatrix} x_0^2 & x_0 & 1 \\ x_1^2 & x_1 & 1 \\ x_2^2 & x_2 & 1 \end{pmatrix} \cdot \begin{pmatrix} a \\ b \\ c \end{pmatrix} \qquad (5)$$

d.h.

$$Y = A \cdot T \qquad (6)$$

durch Lösung der Matrixgleichung (6), mit $det(\mathbf{A}) \neq 0$ erhält man:

$$\begin{pmatrix} a \\ b \\ c \end{pmatrix} = T = A^{-1} \cdot Y \qquad (7)$$

aus der man die Parameter $a$, $b$, $c$, erhält, die, ersetzt in der (3) es ermöglichen, die Grafik der lokal rekonstruierten Verformungskurve darzustellen;

- die neue Gruppe von drei Punkten, die man durch Vorrücken einer Position erhält, besteht aus $P_1$, $P_2$, $P_3$, und man wiederholt den vorherigen Schritt auf den neuen Punkten, bis zum Erreichen des Endpunkts der Struktur;

- bei Erreichen des Endpunkts der Struktur wird das Verfahren wiederholt, indem die Gruppen von drei Punkten in umgekehrter Reihenfolge genommen werden und man rückwärts vom Ende der Struktur bis zum Anfang geht.

**10.** Gerät zur Spannungsanalyse, gemäß dem Anspruch 9 **dadurch gekennzeichnet, dass**:

- die obengenannte Näherungsmethode in einer ersten Instanz verwendet wird, um das obengenannte Referenzprofil der Struktur mit den entsprechenden *Nullmessungen*, die von den *elektronischen Wasserwaagen* (104) erfasst wurden, z.B. bei Fehlen von Belastung oder Ereignissen, die Verformungen an derselben Struktur verursachen, zu erhalten; dieselben *Nullmessungen* werden mit Hilfe der obengenannten Mittel für die Speicherung des Datenverlaufs gespeichert;

- die obengenannte Näherungsmethode in einer zweiten Instanz verwendet wird, um das obengenannte Verformungsprofil der Struktur mit den entsprechenden *Messungen*, die von den *elektronischen Wasserwaagen* (104) erfasst wurden, denen die entsprechenden zuvor gespeicherten *Nullmessungen* subtrahiert wurden, das alles zum Beispiel bei Vorhandensein eines Belastungstestes oder Ereignissen, die Verformungen an derselben Struktur verursachen, zu erhalten.

**11.** Gerät zur Spannungsanalyse, gemäß einem der vorherigen Ansprüchen, **dadurch gekennzeichnet, dass**:

- die obengenannten *elektronischen Wasserwaagen* (104) mit elektrischer Energie versorgt werden, die aus einem oder mehreren der folgenden Mittel stammt: ein Kabel, das an das nationale Stromnetz angeschlossen ist; ein Kraftstoffstromgenerator; eine Batterie oder externer Akku; eine interne wiederaufladbare Batterie; ein Gerät mit Solarpaneelen

**12.** Gerät zur Spannungsanalyse, gemäß einem der vorherigen Ansprüche, **dadurch gekennzeichnet, dass**:

- die obengenannten *elektronischen Wasserwaagen* (104) gemäß einer der folgenden Konfigurationen an die obengenannte elektronische Steuerschaltung angeschlossen sind: sternförmig; baumförmig; kaskadenförmig; oder ringförmig.

**13.** Gerät zur Spannungsanalyse, gemäß der vorherigen Ansprüchen 5 und 12 **dadurch gekennzeichnet, dass**:

- eine oder mehrere Verbindungen zwischen den obengenannten *elektronischen Wasserwaagen* (104) und der obengenannten elektronischen Steuerschaltung redundant sind und dieselben Verbindungen verdoppelt, verdreifacht oder vervielfacht werden können, indem eine Datenübertragungstechnik oder eine Kombination von Datenübertragungstechniken, die aus dem zuvor aufgeführten Anspruch 5 ausgewählt werden können, verwendet wird

**14.** Gerät zur Spannungsanalyse, gemäß einem der vorherigen Ansprüchen, **dadurch gekennzeichnet, dass**:

- die obengenannten *elektronischen Wasserwaagen* (104) in Übereinstimmung der *Segmente* im Vorschub, während der Konstruktionsphase einer Brücke für die Überwachung der Verformungen derselben Brücke, installiert wurden.

**Revendications**

**1.** Dispositif d'analyse des contraintes pour contrôler la stabilité d'une structure, comme un pont ou un viaduc, comprenant:

- une série d'éléments de mesure (100), chacun étant placé au niveau d'un point critique respectif de cette structure, et chaque élément de mesure (100) comprenant à son tour un *inclinomètre* (104) mesurant l'angle d'inclinaison par rapport à un plan de référence;
- un circuit électronique de contrôle comprenant à son tour: des systèmes d'acquisition des données provenant des *inclinomètres* respectifs (104) et correspondant aux valeurs de l'angle d'inclinaison; des systèmes de reconstruction du profil de déformation de l'ensemble de la structure, par rapport à un profil de référence; des systèmes pour le stockage de l'historique des données; et des systèmes pour la transmission de ces données à distance, en *temps réel*, vers une unité de contrôle à distance,

**caractérisé par le fait que**:

- chacun desdits éléments de mesure (100) comprend à son tour une structure de support composée d'une barre linéaire rigide (101) avec: d'un côté, une articulation (102) permettant à cette barre (101) une certaine liberté de rotation par rapport à un axe transversal (103) de référence; et de l'autre, un support mobile sur un palier (107) permettant à cette barre (101) une certaine liberté de mouvement dans le sens longitudinal,

de telle sorte que chaque mesure de l'angle d'inclinaison soit mesurée, en moyenne, par rapport aux aspérités locales de la surface où l'élément de mesure est placé sur des surfaces rugueuses et non linéaires, et que cette mesure de l'angle d'inclinaison soit à l'abri des phénomènes de dilatation thermique des matériaux.

**2.** Dispositif d'analyse des contraintes, selon la revendication 1, **caractérisé par le fait que**:

- lesdits éléments de mesure (100), avec les *inclinomètres* respectifs (104), sont tous alignés horizontalement selon l'axe longitudinal de la structure sur laquelle ils sont installés, de manière à détecter tout affaissement ou déformation à cet endroit, dans le sens longitudinal.

**3.** Dispositif d'analyse des contraintes, selon la revendication 1, **caractérisé par le fait que**:

- lesdits éléments de mesure (100), avec les *inclinomètres* respectifs (104), sont tous placés horizontalement et transversalement par rapport à l'axe longitudinal de la structure sur laquelle ils sont installés, de manière à détecter tout affaissement ou déformation à cet endroit, dans le sens transversal.

**4.** Dispositif d'analyse des contraintes, selon l'une des revendications précédentes, **caractérisé par le fait que**:

- ladite transmission de données à distance, en *temps réel*, vers une unité de contrôle externe, s'effectue par une modulation de signaux électriques sur des câbles conducteurs, par une modulation de signaux optiques sur des fibres optiques, par une modulation d'un rayonnement électromagnétique irradié par les airs, par une modulation de signaux électriques acheminés sur un réseau téléphonique fixe, mobile ou satellitaire, ou encore par une combinaison de ces techniques.

**5.** Dispositif d'analyse des contraintes, selon l'une des revendications précédentes, **caractérisé par le fait que**:

- ladite transmission de données d'un ou plusieurs desdits *inclinomètres* (104) audit circuit électronique de contrôle s'effectue par une modulation de signaux électriques sur des câbles conducteurs, par une modulation de signaux optiques sur des fibres optiques, par une modulation d'un rayonnement électromagnétique irradié par les airs, par une modulation de signaux électriques acheminés sur un réseau téléphonique fixe, mobile ou satellitaire, ou encore par une combinaison de ces techniques.

**6.** Dispositif d'analyse des contraintes, selon la précédente revendication 1, **caractérisé par le fait que**:

- ledit circuit électronique de contrôle et ladite unité de contrôle à distance sont contenus dans ces systèmes de traitement, constitués par un *ordinateur*, une *tablette PC*, un *smartphone*, un PDA, une *station de travail*, un *ordinateur central* ou par tout autre appareil monoprocesseur ou multiprocesseur.

**7.** Dispositif d'analyse des contraintes, selon l'une des revendications précédentes, **caractérisé par le fait que**:

- chacun desdits *inclinomètres* (104) comprend principalement: un récipient partiellement rempli d'un liquide électrolytique; au moins une paire d'électrodes partiellement immergées dans ce liquide et au moins une électrode commune de référence; la partie sans liquide est occupée par une bulle d'air ou de gaz inerte qui se déplace lors d'une inclinaison de ce récipient par rapport au plan horizontal,

de telle sorte que lorsque le récipient se déplace, chaque électrode augmente ou diminue la partie de la surface qui est en contact avec le liquide électrolytique, en modifiant ainsi son *impédance* par rapport à l'électrode de référence; et qu'un circuit électronique, relié auxdites électrodes, produise une tension de sortie  directement proportionnelle à l'*impédance* mesurée, et donc directement proportionnelle à l'angle d'inclinaison de l'*inclinomètre* (104) par rapport au plan horizontal.

8. Dispositif d'analyse des contraintes, selon l'une des revendications précédentes, **caractérisé par le fait que** lesdits systèmes de reconstruction du profil de déformation de l'ensemble de la structure utilisent une méthode d'approximation polynomiale par morceaux d'une chaînette qui, en considérant les deux points extrêmes comme fixes, a un tracé représenté par la fonction mathématique (110), de type cosinus hyperbolique:

$$y = k \cdot \cosh\left(\frac{x}{k}\right) = \frac{k}{2} \cdot \left(e^{(x/k)} + e^{(-x/k)}\right) \qquad (1)$$

9. Dispositif d'analyse des contraintes, selon la revendication 8, **caractérisé par le fait que** ladite méthode d'approximation comporte les étapes suivantes:

- les points de mesure sont considérés par groupes de trois, et au niveau de chaque mesure angulaire respective on calcule la fonction trigonométrique tangente, en obtenant ainsi le tracé de la dérivée avant le profil;
- pour chaque groupe de trois points $P_0$, $P_1$, $P_2$ on considère donc les coordonnées:

$$P_0(x_0, y_0) \qquad P_1(x_1, y_1) \qquad P_2(x_2, y_2) \qquad (2)$$

et l'on choisit une approximation de type parabolique, telle que:

$$y = a \cdot x^2 + b \cdot x + c \qquad (3)$$

en remplaçant les coordonnées des points, on obtient le système d'équations:

$$\begin{cases} y_0 = a \cdot x_0^2 + b \cdot x_0 + c \\ y_1 = a \cdot x_1^2 + b \cdot x_1 + c \\ y_2 = a \cdot x_2^2 + b \cdot x_2 + c \end{cases} \qquad (4)$$

qui peut être écrit sous forme matricielle:

$$\begin{pmatrix} y_0 \\ y_1 \\ y_2 \end{pmatrix} = \begin{pmatrix} x_0^2 & x_0 & 1 \\ x_1^2 & x_1 & 1 \\ x_2^2 & x_2 & 1 \end{pmatrix} \cdot \begin{pmatrix} a \\ b \\ c \end{pmatrix} \qquad (5)$$

c'est-à-dire:

$$Y = A \cdot T \qquad (6)$$

en résolvant l'équation matricielle (6), avec $det(A) \neq 0$ on obtient:

$$\begin{pmatrix} a \\ b \\ c \end{pmatrix} = T = A^{-1} \cdot Y \qquad (7)$$

d'où l'on obtient les paramètres a, b, c, qui, en les remplaçant dans l'équation (3), permettent de tracer le graphique de la courbe de déformation reconstruite localement;
- le nouveau groupe de trois points, obtenu en se déplaçant d'une position vers l'avant, est constitué de $P_1$, $P_2$, $P_3$, puis l'on répète l'étape précédente sur les nouveaux points jusqu'à atteindre le point final de la structure;
- en arrivant au point final de la structure, on recommence le procédé en prenant les groupes de trois points en sens inverse, de la fin au début de la structure.

**10.** Dispositif d'analyse des contraintes, selon la revendication 9, **caractérisé par le fait que**:

- ladite méthode d'approximation est utilisée d'une part pour obtenir ledit profil de référence de la structure, avec les *valeurs zéro* respectives mesurées par les *inclinomètres* (104), par exemple en l'absence de charge ou d'événements provoquant des déformations dans cette structure; ces *valeurs zéro* sont mémorisées en utilisant lesdits systèmes pour le stockage de l'historique des données;
- d'autre part, ladite méthode d'approximation est utilisée pour obtenir ledit profil de déformation de la structure, avec les valeurs respectives mesurées par les *inclinomètres* (104), desquelles sont déduites les *valeurs zéro* respectives précédemment mémorisées, le tout, par exemple, en présence d'une charge d'essai ou d'événements provoquant des déformations dans cette structure.

**11.** Dispositif d'analyse des contraintes, selon l'une des revendications précédentes, **caractérisé par le fait que**:

- lesdits *inclinomètres* (104) sont alimentés par de l'énergie électrique provenant de l'un ou plusieurs des moyens suivants: un câble relié au réseau électrique national; un générateur de courant à combustible; une batterie ou un accumulateur externe; une batterie interne rechargeable; un dispositif à panneaux solaires.

**12.** Dispositif d'analyse des contraintes, selon l'une des revendications précédentes, **caractérisé par le fait que**:

- lesdits *inclinomètres* (104) sont reliés audit circuit électronique de contrôle selon l'une des configurations suivantes: en étoile; ramifié; en cascade; ou en boucle.

**13.** Dispositif d'analyse des contraintes, selon les précédentes revendications 5 et 12, **caractérisé par le fait que**:

- un ou plusieurs branchements entre lesdits *inclinomètres* (104) et ledit circuit électronique de contrôle sont redondants, et ces branchements peuvent être doublés, triplés voire plus, en utilisant une technique ou une combinaison de techniques de transmission de données, au choix parmi celles qui ont été précédemment énumérées dans la revendication 5.

**14.** Dispositif d'analyse des contraintes, selon l'une des revendications précédentes, **caractérisé par le fait que**:

- lesdits *inclinomètres* (104) sont installés au niveau des *voussoirs* posés à l'avancement, pendant la phase de construction d'un pont pour contrôler ses déformations.

**Fig. 1**

**Fig. 2**

**Fig. 3**

**Fig. 4**

**Fig. 5**

**Fig. 6**

**Fig. 7**

**(a)**

**(b)**

**(c)**

**(d)**

**Fig. 8**

**EP 2 469 225 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4547972 A
- US 20040187329 A1
- GB 1251220 A
- US 6647161 B